# EUROPÄISCHE PATENTSCHRIFT

(11) **EP 4 386 325 B1**
(45) Veröffentlichungstag und Bekanntmachung des Hinweises auf die Patenterteilung: **25.03.2026**
(21) Anmeldenummer: 22213298.7
(22) Anmeldetag: 14.12.2022
(51) Int. Cl.: G01D 3/08, G01D 5/347

(54) **SENSORANORDNUNG UND VERFAHREN ZUM BETRIEB EINER SENSORANORDNUNG**
SENSOR ARRANGEMENT AND METHOD FOR OPERATING A SENSOR ARRANGEMENT
AGENCEMENT DE CAPTEUR ET PROCÉDÉ DE FONCTIONNEMENT D'UN AGENCEMENT DE CAPTEUR

(43) Veröffentlichungstag der Anmeldung: 19.06.2024
(73) Patentinhaber: Leuze electronic GmbH + Co. KG, 73277 Owen/Teck (DE)
(72) Erfinder: Kirchner, Markus, 72636 Frickenhausen (DE); Tippmann, Martin, 73235 Weilheim an der Teck (DE); Wolf, Tilo, 73240 Wendlingen (DE); Heckmayr, Alexander, 86807 Buchloe (DE); Feller, Bernhard, 86316 Friedberg (DE); Linsenmayer, Jörg, 73272 Neidlingen (DE); Lamparter, Thomas, 72584 Hülben (DE); Knöpfle, Jürgen, 73054 Eislingen (DE)
(74) Vertreter: Ruckh, Rainer Gerhard

(56) Entgegenhaltungen:
- EP-A1- 3 270 114
- EP-A1- 3 399 336
- DE-A1- 102008 032 786

## Beschreibung

Die Erfindung betrifft eine Sensoranordnung und ein Verfahren zum Betrieb einer Sensoranordnung.

Eine derartige Sensoranordnung ist aus der DE 102 11 779 B4 bekannt. Die dort beschriebene Vorrichtung weist einen optischen Sensor mit einem Sendelichtstrahlen emittierenden Sender, einen Empfangslichtstrahlen empfangenden Empfänger, Mitteln zur Führung der Sendelichtstrahlen innerhalb eines Abtastbereichs und eine Auswerteeinheit zur Auswertung der am Ausgang des Empfängers anstehenden Empfangssignale auf. Mit dem optischen Sensor erfolgt die Erfassung von Positionsmarken, welche ein Positionsmaßsystem bilden. Durch die Erfassung von Positionsmarken des Positionsmaßsystems zu zwei unterschiedlichen Zeitpunkten wird zudem die Geschwindigkeit des optischen Sensors relativ zum Positionsmaßsystem bestimmt.

Der optische Sensor ist besonders vorteilhaft an einem Fahrzeug angebracht, wobei das Positionsmaßsystem stationär an der Fahrbahn angeordnet ist, entlang derer das Fahrzeug bewegt wird. Prinzipiell kann auch ein Positionsmaßsystem bezüglich eines stationär angeordneten optischen Sensors bewegt werden. Durch die fortlaufende Erfassung der Positionsmarken des Positionsmaßsystems werden in dem optischen Sensor kontinuierlich die aktuellen Geschwindigkeits- und Positionsmesswerte ermittelt und an die Steuerung des Fahrzeuges übermittelt. In der Steuerung können diese Messwerte ohne weitere Auswertung und insbesondere ohne jeden Synchronisationsaufwand direkt zur Steuerung des Fahrzeugs verwendet werden.

Das Positionsmaßsystem ist typischerweise in Form eines Bandes ausgebildet, das auf eine Auflagefläche, insbesondere einer Fahrbahnbegrenzung aufgeklebt wird.

Durch äußere Störeinflüsse, insbesondere durch ein Stoßen von Gegenständen gegen dieses Band können Positionsmarken des Positionsmaßsystems beschädigt werden. Diese beschädigten Positionsmarken können vom optischen Sensor nicht mehr gelesen werden, so dass in diesem Bereich keine Positionsbestimmung mehr möglich ist.

Prinzipiell ist es möglich, die defekten Positionsmarken durch exakt dieselben Positionsmarken zu ersetzen. Damit aber müssen Teile der Positionsmarken neu bestellt, beschafft und schließlich installiert werden. Nachteilig ist, dass die Lieferzeiten neuer Abschnitte des Positionsmaßsystems unerwünscht hoch sind. Zudem soll nur ein Teil der Positionsmarken des Positionsmaßsystems ersetzt werden, was beim Lieferanten einer entsprechenden Konfektionierung notwendig macht. Das auf Vorrat halten eines kompletten Positionsmaßsystems ist aufwändig und ineffizient, da hiervon nur kleine Teile zur Reparaturzwecken des im Einsatz befindlichen Bandes benötigt werden.

Die DE 10 2008 032 786 A1 betrifft eine Vorrichtung und ein Verfahren zum Bestimmen einer Position eines Fahrzeugs. Das Fahrzeug ist entlang einer Bahn in einer Bewegungsrichtung beweglich und weist einen optischen Positionsmarkenleser zum linienweisen Abtasten von Positionsmarken auf. Die Positionsmarken sind entlang der Bahn in festgelegter Orientierung angeordnet. Dazu weist der Positionsmarkenleser Mittel zur Mehrfachabtastung einzelner Positionsmarken in einer Mehrzahl zueinander beabstandeter Linien auf.

Die EP 3 399 336 A1 betrifft eine Vorrichtung mit einem von einer Anordnung von Marken gebildeten Positionsmaßsystem und mit einem optischen Sensor zur Erfassung der Marken des Positionsmaßsystems. Der optische Sensor und das Positionsmaßsystem sind relativ zueinander beweglich angeordnet. In jeder Marke sind Positionsinformationen und eine Prüfsumme kodiert. In einer Auswerteeinheit des optischen Sensors sind die Positionsinformationen und die Prüfsumme ausgewertet. Anhand der Prüfsumme ist eine Fehlerkontrolle durchgeführt.

Die EP 3 270 114 A1 betrifft eine Sensoranordnung mit einem ersten Positionssensor und einem diesem zugeordneten ersten kooperativem Ziel, welche einen Erfassungsbereich begrenzen. Durch Positionsmessungen werden mit dem ersten Positionssensor gegen das erste kooperative Ziel erste Positionsmesswerte erhalten. Weiterhin sind ein zweiter Positionssensor und ein diesem zugeordnetes zweites kooperative Ziel vorgesehen, welche den Erfassungsbereich begrenzen. Durch Positionsmessungen mit dem zweiten Positionssensor gegen das zweite kooperative Ziel werden zweite Positionsmesswerte erhalten. Mit einer Steuereinheit, in welcher die ersten und zweiten Positionsmesswerte der beiden Positionssensoren zu einer Verrechnungsgröße verrechnet werden, wird die Funktion der Positionssensoren kontrolliert.

Der Erfindung liegt die Aufgabe zugrunde, eine einfache Reparaturmöglichkeit für ein Positionsmaßsystem einer Sensoranordnung der eingangs genannten Art bereitzustellen.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben
Die erfindungsgemäße Sensoranordnung umfasst ein bandförmiges Positionsmaßsystem, welches eine Anordnung von Positionsmarken aufweist, in welchen jeweils als Positionswerte die Positionen der Positionsmarken innerhalb des Positionsmaßsystems kodiert sind. Mit einem relativ zum Positionsmaßsystem beweglichen optischen Sensor ist durch Lesen von Positionsmarken dessen Position relativ zum Positionsmaßsystem bestimmbar. Eine defekte Folge von Positionsmarken des Positionsmaßsystems wird mit einem Korrekturband abgedeckt, wobei das Korrekturband Bestandteil der Sensoranordnung ist und eine Folge von Korrekturmarken aufweist, die sich von den Positionsmarken unterscheiden. Die in den Positionsmarken enthaltenen Positionswerte sind in einer Positionsmaßtabelle im optischen Sensor abgespeichert. Bei einem defekte Positionsmarken abdeckenden Korrekturband ersetzen die Kodierungen der Korrekturmarken des Korrekturbands den Wertebereich der Positionswerte der defekten Positionsmarken in der Positionsmaßtabelle. Alternativ bilden die Korrekturmarken einen Wertebereich, aus welchem im optischen Sensor die Positionswerte der defekten Positionsmarken ermittelt werden.

Mit dem erfindungsgemäß vorgesehenen Korrekturband wird eine einfache und schnelle Reparatur eines stellenweise defekten Positionsmaßsystems ermöglicht. Nach der Reparatur, d. h. dann, wenn das Korrekturband die defekte Stelle des Positionsmaßsystems abdeckt, kann über die gesamte Ausdehnung des Positionsmaßsystems eine Positionierung des optischen Sensors erfolgen, so dass die Funktionalität des Positionsmaßsystems und damit der gesamten Sensoranordnung komplett erhalten bleibt.

Ein wesentlicher Aspekt der Erfindung besteht darin, dass die Korrekturmarken des Korrekturbands von den Positionsmarken des Positionsmaßsystems verschieden sind. Die Korrekturmarken enthalten demzufolge nicht die Positionswerte der Positionsmarken sondern Kodierungen, die sich lediglich eindeutig voneinander unterscheiden müssen.

Dies ermöglicht es, dass das erfindungsgemäße Korrekturband an beliebigen Stellen des Positionsmaßsystems eingesetzt werden kann. Dies ist ein wesentlicher Vorteil gegenüber der Reparatur mit einem Segment eines Positionsmaßsystems, das exakt der defekten Stelle des Positionsmaßsystems entsprechen muss. Damit wird die Flexibilität der Reparatur des Produktionsmaßsystems durch die Verwendung des erfindungsgemäßen Korrekturbands erheblich erhöht.

Dieser Vorteil wird erfindungsgemäß dadurch erzielt, dass die Korrekturmarken des auf dem Positionsmaßsystem aufgebrachten Korrekturbands den Wertebereich des überdeckten, defekten Positionsmaßsystems ersetzen. Damit ist das mit dem Korrekturband reparierte Positionsmaßsystem gleichwertig zum ursprünglichen Produktionsmaßsystem, d. h. der optische Sensor kann auch durch Lesen der Korrekturmarke des Korrekturbands exakt seine Position relativ zum Produktionsmaßsystem bestimmen.

Wesentlich hierbei ist, dass im optischen Sensor die Folge der Positionsmarken des Positionsmaßsystems als Positionsmaßtabelle abgespeichert ist. Liegt ein lokaler Defekt des Positionsmaßsystems vor, der mit dem Korrekturband überdeckt wird, ersetzen die Korrekturmarken die defekten Positionsmarken des Positionsmaßsystems. Dies wird in der Positionsmaßtabelle des optischen Sensors eingetragen. Nach der letzten intakten Positionsmarke beginnt die Folge der Korrekturmarke, die an der ersten wieder intakten Positionsmarke endet. Die eindeutigen Kodierungen bilden dann Interpolationen zwischen den beiden den Defekt des Positionsmaßsystems begrenzenden intakten Positionsmarken, so dass bei Lesen dieser Korrekturmarke durch den optischen Sensor anhand der korrigierten Positionsmaßtabelle die Position des optischen Sensors relativ zum Positionsmaßsystem bestimmt ist.

Dabei werden vorteilhaft im optischen Sensor die Kodierungen der Korrekturmarke in eine Korrekturwertfolge übersetzt, welche den Wertebereich der abgedeckten Positionsmarken ersetzt.

Insbesondere können die Kodierungen der Korrekturmarke des Korrekturbands eine Zahlen- und/oder Buchstabenfolge bilden.

Diese Zahlen- und Buchstabenwerte können in eine lineare Korrekturwertfolge übersetzt werden, die zwischen den Positionswerten der das Korrekturband begrenzenden Positionsmarken interpolieren.

Vorteilhaft weist der optische Sensor eine Speichereinheit auf, in welcher die Positionsmaßtabelle und die Kodierungen der Korrekturmarken nicht flüchtig abgespeichert sind.

Insbesondere ist die Speichereinheit einer Auswerteeinheit des optischen Sensors zugeordnet.

Durch die nichtflüchtige Speicherung der Positionsmaßtabelle, die bei einem defekten Positionsmaßsystem durch Kodierungen der Korrekturmarke des Korrekturbands ergänzt ist, bleiben die Werte der Positionsmaßtabelle auch bei einem Stromausfall erhalten, so dass nach Ende des Stromausfalls eine Positionierung des optischen Sensors relativ zum Positionsmaßsystem sofort und ohne weitere Einrichtarbeiten sofort fortgesetzt werden kann.

Vorteilhaft werden mittels des optischen Sensors die Korrekturmarken erkannt und die Kodierungen der Korrekturmarken in die Positionsmaßtabelle eingetragen.

Die Korrektur der Positionsmaßtabelle durch Ersetzen der defekten Positionsmarken mit den Kodierungen der Korrekturmarken erfolgt somit automatisch im optischen Sensor selbst. Der optische Sensor erkennt selbsttätig die erste und letzte noch intakte Positionsmarke beidseits der defekten Stelle des Positionsmaßsystem und die dazwischen liegenden Korrekturmarken. Dann wird aus den Kodierungen der Korrekturmarken eine Korrekturwertfolge gebildet, die zwischen den Positionswerten der Positionsmarke, die an die defekte Stelle des Positionsmaßsystems angrenzen, liegen, wodurch die Kodierung der Korrekturmarke des Korrekturbands den Wertebereich des defekten Teils des Positionsmaßsystems vollständig ersetzen.

Gemäß einer zweiten Variante der Erfindung bilden die Korrekturmarken, die am Positionsmaßsystem angebracht sind und damit defekte Positionsmarken abdecken, einen Wertebereich, aus welchem im optischen Sensor die Positionswerte der defekten Positionsmarken ermittelt werden. In diesem Fall wird somit aus den aufgebrachten Korrekturmarken im optischen Sensor die ursprüngliche Folge der Positionsmarken rekonstruiert.

Dabei kann die Ermittlung von Positionswerten defekter, mit Korrekturmarken abgedeckter Positionsmarken mittels Formeln erfolgen.

Die Korrekturmarken enthalten Korrekturwerte, die von den Positionswerten verschieden sind. Durch eine bekannte Zuordnung von Korrekturmarken zu abgedeckten Positionsmarken sowie anhand bekannter Korrekturwerte der Korrekturmarken und Positionswerte der Positionsmarken kann mit einer Formel der Korrekturwert einer Korrekturmarke in den Positionswert der mit dieser Korrekturmarke abgedeckten Positionsmarke umgerechnet werden, wodurch die ursprüngliche Folge von Positionswerten im Positionsmaßsystem rekonstruiert wird.

Alternativ kann die Ermittlung von Positionswerten defekter, mit Korrekturmarken abgedeckter Positionsmarken durch Suchen von Kodierungen der Korrekturmarken in einer Korrekturtabelle erfolgen.

Dabei können lineare Suchalgorithmen eingesetzt werden. Insbesondere können geschwindigkeitsoptimierte Suchverfahren wie z.B. binäres Suchen, Indizieren oder Hashverfahren eingesetzt werden.

Die Unterscheidbarkeit von Positionsmarken und Korrekturmarken ist vorteilhaft dadurch gegeben, dass der Wertebereich der Korrekturmarken im Wertebereich der Positionsmarken nicht enthalten ist, und/oder dass sich die Korrekturmarken von den Positionsmarken hinsichtlich eines Zusatzmerkmals unterscheiden, welches mit dem optischen Sensor erfassbar ist.

Die Positionswerte von Positionsmarken beziehungsweise die Korrekturwerte von Korrekturmarken können beispielsweise von Zahlenfolgen gebildet sein, wobei die Wertebereiche von vorgegebenen Bereichen von Zahlenwerten gebildet sein können.

Alternativ oder zusätzlich können sich die Korrekturmarken von Positionsmarken dadurch unterscheiden, dass diese Zusatzmerkmale in Form von Farbmerkmalen, Kennungen oder dergleichen aufweisen.

Weiterhin können die Korrekturmarken eine Sequenz von Werten bilden, die von der Sequenz der in den Positionsmarken enthaltenen Positionen verschieden ist, wobei die Sequenzen der Korrekturmarken und der Positionsmarken mittels des optischen Sensors unterscheidbar sind.

Schließlich kann wenigstens eine Korrekturmarke einen Steuercode enthalten.

Mit derartigen Steuercodes kann der Umfang und/oder das Ende einer Folge von Korrekturmarken gekennzeichnet werden. Anhand der Steuercodes kann der optische Sensor die Folge von Korrekturmarken einfacher erkennen und auch lokalisieren.

Gemäß einer vorteilhaften Ausführungsform sind an einer Reparaturstelle am Positionsmaßsystem angebrachte Korrekturmarken im optischen Sensor konfigurierbar.

Die durch Korrekturmarken gebildete Reparaturstelle am Positionsmaßsystem ist somit durch die Konfiguration im optischen Sensor so, dass die Reparaturstelle vom optischen Sensor nicht selbsttätig erfasst und erkannt werden muss.

Gemäß einer ersten vorteilhaften Ausgestaltung wird die Konfiguration mittels einer Ein-/Ausgabeeinheit durchgeführt.

Somit kann ein Anwender durch Eingaben an der Ein-/Ausgabeeinheit die Reparaturstelle konfigurieren und im optischen Sensor vergeben. Als Ein-/Ausgabeeinheit bieten sich allgemein Schnittstellen oder auch Tastaturen oder ähnliche Eingabemöglichkeiten an Rechnereinheiten an. Die durchgeführte Konfiguration wird vorteilhaft dem Anwender angezeigt, vorteilhaft an Anzeigemitteln der Ein-/Ausgabeeinheit.

Gemäß einer zweiten vorteilhaften Ausgestaltung werden an einer Reparaturstelle am Positionsmaßsystem angebrachte Korrekturmarken in einem Einlernvorgang mittels des optischen Sensors ermittelt.

Im Einlernvorgang tastet der optische Sensor das Positionsmaßsystem mit der Reparaturstelle ab und speichert die dabei erfassten Informationen der Positionsmarken und Korrekturmarken. Dabei werden die Positionsmarken und Korrekturmarken anhand ihrer unterschiedlichen Merkmale voneinander unterschieden. Dabei können generell auch aufgefundene Reparaturstellen mit Korrekturmarken im optischen Sensor protokolliert werden.

Insbesondere kann auch der Einlernvorgang während eines Arbeitsbetriebs des optischen Sensors durchgeführt werden.

Gemäß einer vorteilhaften Ausführungsform generiert der optische Sensor bei Erfassung von an einer Reparaturstelle angebrachten Korrekturmarken eine Warnmeldung.

Die Reparatur des Positionsmaßsystems durch Anbringen von Korrekturmarken auf defekten Positionsmarken stellt zwar einen fehlerfreien Betrieb der Sensoranordnung sicher, jedoch bilden die Korrekturmarken generell eine Zwischenlösung solange, bis neu gelieferte Positionsmarken die alten, defekten Positionsmarken ersetzen und demzufolge die Korrekturmarken wieder entfernt werden können.

Mit der Warnmeldung wird einem Anwender signalisiert, dass Korrekturmarken am Positionsmaßsystem vorhanden sind und somit ein Bedarf besteht, diese Positionsmarken zu bestellen, um mit diesen defekte Positionsmarken zu ersetzen.

Vorteilhaft wird die Warnmeldung mit einer voreinstellbaren Verzögerungszeit nach Anbringen der Reparaturstelle generiert.

Nachdem defekte Positionsmarken des Positionsmaßsystems durch Korrekturmarken ersetzt wurden, ist ein sofortiges Beschaffen neuer Positionsmarken nicht nötig. Daher ist es ausreichend, wenn die Warnmeldung zeitlich verzögert generiert wird.

Weiter vorteilhaft enthält die Warnmeldung Positionen der Korrekturmarken am Positionsmaßsystem und/oder den Zeitpunkt des Anbringens der Reparaturstelle.

Die Warnmeldung enthält somit alle für den Anwender wesentlichen Informationen über die Reparaturstelle am Positionsmaßsystem.

Gemäß einer vorteilhaften Ausführungsform sind die Positionsmarken und/oder Korrekturmarken optische Codes in Form von Barcodes, 2 D-Codes oder 3 D-Codes.

Beispiele für 2 D-Codes sind 2 D-Matrixcodes wie Composite Codes, QR Codes, Stacked Codes, Maxi-Codes oder Aztec Codes.

Dabei können die Positionsmarken und/oder Korrekturmarken in Form von geprägten oder verschiedenfarbigen Codes ausgebildet sein.

Diese Codes können nicht nur auf einer Unterlage aufgedruckt sein, sondern auch mit Hilfe von Lasern dort aufgebracht werden.

Gemäß einer Weiterbildung der Erfindung weisen die Positionsmarken und/oder Korrekturmarken nicht sichtbare Codestrukturen auf.

Hierbei weisen die Codes z.B. bestimmte Leitfähigkeitseigenschaften, magnetische oder dielektrische Eigenschaften oder durch Ultraschallabtastung erfassbare Strukturen auf. Zur Abtastung derartiger Codes werden dann keine optischen Sensoren, sondern spezifische andere Sensoren eingesetzt.

Gemäß einer weiteren vorteilhaften Weiterbildung der Erfindung bestehen die Positionsmarken und/oder Korrekturmarken jeweils aus wenigstens zwei Codes, die mittels eines mehrkanaligen Abtastsystems abgetastet werden.

Dadurch wird ein redundantes Abtastsystem geschaffen, welches erhöhten Sicherheitsanforderungen genügt.

Gemäß einer besonderen vorteilhaften Ausgestaltung der Erfindung ist der optische Sensor an einem Fahrzeug angeordnet.

Dementsprechend ist das Positionsmaßsystem an einer Fahrbahnbegrenzung angebracht.

Durch Erfassen der Positionsmarken des Positionsmaßsystems mittels des optischen Sensors kann das Fahrzeug in Sollpositionen positioniert werden, beispielsweise um in Lagersystemen Be- und Entladevorgänge durchzuführen. Beispielsweise kann das Fahrzeug von einem Regalbediengerät gebildet sein, das an Regalen eines Lagersystems positioniert werden muss.

Insbesondere bei derartigen Applikationen kann vorteilhaft in wenigstens einer Korrekturmarke des Korrekturbands eine Bereichskennung kodiert sein.

Diese Bereichskennungen liefern Zusatzinformationen, die zur Führung des Fahrzeugs verwendet werden können.

Beispielsweise können mit den Bereichskennungen Anfangs- oder Endbereiche von Gassen, in welchen das Fahrzeug fährt, gekennzeichnet werden. Abhängig von der Erkennung dieser Bereichskennungen kann die Geschwindigkeit des Fahrzeugs gesteuert werden.

Der optische Sensor der erfindungsgemäßen Sensoranordnung kann ein scannender Sensor oder auch ein Kamerasensor sein.

Besonders vorteilhaft ist das Positionsmaßsystem als Band ausgebildet, das auf einer Auflagefläche aufgeklebt ist.

Dementsprechend ist auch das Korrekturband auf dem Positionsmaßsystem aufklebbar.

Dies ermöglicht eine einfache Montage des Positionsmaßsystems und auch ein einfaches Anbringen des Korrekturbands auf dem Positionsmaßsystem.

Die Erfindung wird im Folgenden anhand der Zeichnungen erläutert.
- Figur 1:: Schematische Darstellung eines Ausführungsbeispiels der erfindungsgemäßen Sensoranordnung mit einem optischen Sensor und einem Positionsmaßsystem.
- Figur 2:: Variante des optischen Sensors für die Sensoranordnung gemäß Figur 1.
- Figur 3:: Darstellung eines Ausschnitts des Positionsmaßsystems gemäß Figur 1 mit einem zugeordneten Korrekturband.
- Figur 4:: Ausführungsform eines Positionsmaßsystems mit einer Reparaturstelle.
- Figur 5:: Weitere Ausführungsform eines Positionsmaßsystems mit einer Reparaturstelle.
- Figur 6:: Weitere Ausführungsform eines Positionsmaßsystems mit einer Reparaturstelle.
- Figur 7:: Weitere Ausführungsform eines Positionsmaßsystems mit einer Reparaturstelle.

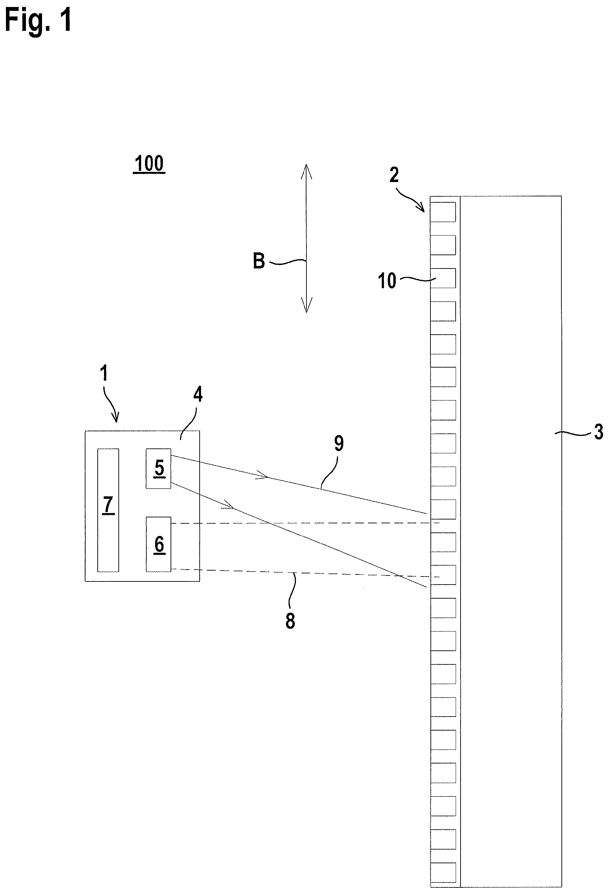

Figur 1 zeigt schematisch ein Ausführungsbeispiel der erfindungsgemäßen Sensoranordnung 100 bestehend aus einem optischen Sensor 1 und einem Positionsmaßsystem 2. Der optische Sensor 1 und/oder das Positionsmaßsystem 2 sind beweglich angeordnet, so dass diese in der mit dem Pfeil B gekennzeichneten Bewegungsrichtung gegeneinander bewegbar sind. Mit der in Figur 1 dargestellten Sensoranordnung 100 können relativ zueinander bewegbare Gegenstände positioniert werden. Im vorliegenden Fall ist ein nicht dargestelltes Fahrzeug gegenüber einem stationären Gegenstand in Form eines Regallagers 3 zu positionieren. Der optische Sensor 1 ist dabei an dem Fahrzeug montiert, während das Positionsmaßsystem 2 am Regallager 3 montiert ist. Das Fahrzeug kann als Regalbediengerät ausgebildet sein.

Zur Erfassung der Fahrzeugposition relativ zum stationären Gegenstand wird das Positionsmaßsystem 2 fortlaufend mit dem optischen Sensor 1 abgetastet.

Der optische Sensor 1 gemäß Figur 1 ist in einem Gehäuse 4 integriert und weist eine Beleuchtungseinheit 5 und als Empfänger 6 eine Flächenkamera auf, die an eine gemeinsame Auswerteeinheit 7 angeschlossen sind.

Die Flächenkamera ist als CCD-Kamera, CMOS-Kamera oder dergleichen ausgebildet und weist eine flächige matrixförmige Anordnung von Empfangselementen bildenden Pixeln auf. Der optische Sensor 1 ist dabei derart am Fahrzeug montiert, dass die Flächenkamera dem Positionsmaßsystem 2 auf gleicher Höhe gegenüberliegt, so dass ein Segment des Positionsmaßsystems 2 im Sichtfeld 8 der Flächenkamera liegt.

Die im Gehäuse 4 stationär angeordnete Beleuchtungseinheit 5 emittiert Lichtstrahlen 9, mittels derer eine homogene Ausleuchtung des im Sichtfeld 8 der Flächenkamera liegenden Segments des Positionsmaßsystems 2 erfolgt. Prinzipiell kann die Beleuchtungseinheit 5 auch außerhalb des Gehäuses 4 angeordnet sein.

Die Beleuchtungseinheit 5 kann Lichtstrahlen 9 im sichtbaren oder unsichtbaren Bereich, insbesondere Infrarotbereich, emittieren.

Das Positionsmaßsystem 2 besteht aus einer Linearanordnung von äquidistant in Reihe angeordneten Positionsmarken 10, wobei die Positionsmarken 10 im vorliegenden Fall als Barcodes ausgebildet sind. Dabei können generell auch 2 D- oder 3 D-Codes eingesetzt werden.

In den Produktionsmarken 10 sind Positionswerte als Positionsinformationen deren Absolutpositionen innerhalb des Positionsmaßsystems 2 kodiert. Durch Erfassen der Kodierung der Produktionsmarken 10 und deren Lagen innerhalb der mit der Flächenkamera aufgenommenen Bilder kann die aktuelle Position des optischen Sensors 1 und damit des Fahrzeugs relativ zum Positionsmaßsystem 2 bestimmt werden. Durch eine zeitaufgelöste Auswertung der Positionsinformationen wird zudem die Geschwindigkeit des optischen Sensors 1 relativ zum Positionsmaßsystem 2 bestimmt. Die ermittelten Positions- und Geschwindigkeitswerte werden der Fahrzeugsteuerung zur Verfügung gestellt, so dass anhand dieser das Fahrzeug gesteuert werden kann.

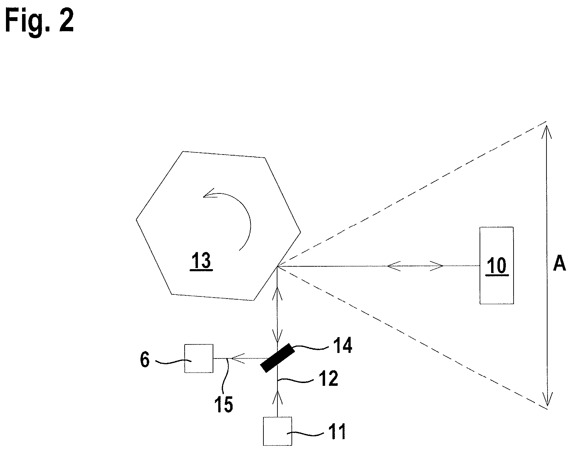

Figur 2 zeigt eine Variante des optischen Sensors 1 in Form eines scannenden Sensors. In diesem Fall werden von einem Sender 11 Sendelichtstrahlen 12 emittiert, die über eine Ablenkeinheit 13 in Form eines sich drehenden, motorisch getriebenen Polygonspiegelrads geführt und dadurch periodisch innerhalb eines Abtastbereichs A geführt sind. Die mittels eines Strahlteilers 14 koaxial zu den Sendelichtstrahlen 12 geführten Empfangslichtstrahlen 15 werden nach Reflexion an der zu erfassenden Positionsmarke 10 über das Polygonspiegelrad zu einem Empfänger 6 geführt. Der Sender 11 kann von einer Leuchtdiode, der Empfänger 6 von einer Photodiode gebildet sein. Auch in diesem Fall wird für eine genaue Positionsbestimmung die Lage der Positionsmarken 10 innerhalb des Abtastbereichs bestimmt.

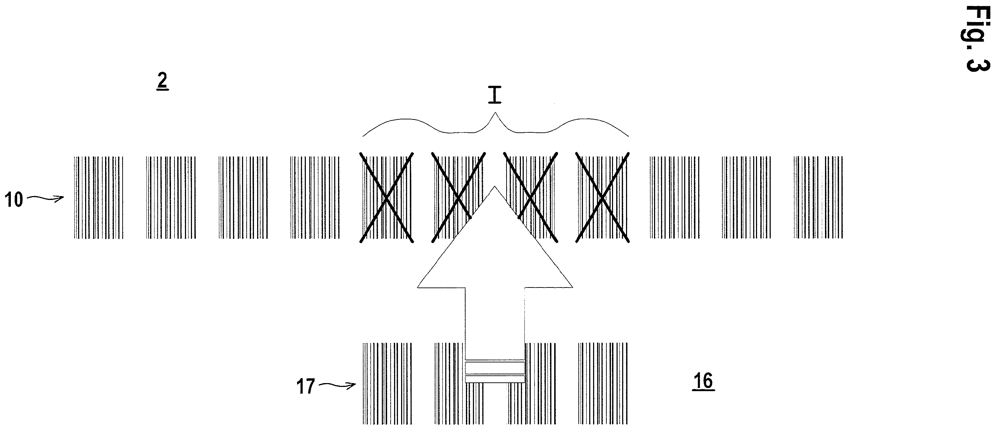

Figur 3 zeigt einen Ausschnitt des Positionsmaßsystems 2 der Sensoranordnung 100 gemäß Figur 1. Das Positionsmaßsystem 2 ist vorzugsweise als Band ausgebildet, das auf eine Auflagefläche, insbesondere eine Fahrbahnbegrenzung aufgeklebt werden kann.

In den als Barcodes ausgebildeten Positionsmarken 10 sind deren Absolutpositionen im Positionsmaßsystem 2 kodiert, die auch als Klartextinformation unter den jeweiligen Bereichsangaben sein können (in Figur 3 nicht dargestellt).

Aufgrund mechanischer Einwirkungen oder dergleichen sind in dem mit I gekennzeichneten Bereich des Positionsmaßsystems 2 die Positionsmarken 10 defekt, so dass diese vom optischen Sensor 1 nicht mehr gelesen werden können (was in Figur 3 durch ein Durchstreichen der Positionsmarken 10 symbolisch dargestellt ist).

Um auch in einem solchen Fehlerfall die Funktion der Sensoranordnung 100 komplett aufrecht zu erhalten, ist, wie in Figur 3 dargestellt, ein Korrekturband 16 vorgesehen, das auf die defekte Stelle des Positionsmaßsystem 2 aufgeklebt werden kann, wie mit dem Pfeil in Figur 3 schematisch dargestellt.

Das Korrekturband 16 weist eine Linearanordnung von Korrekturmarken 17 in Form von Barcodes auf. Das Korrekturband 16 weist dieselbe Breite wie das Produktionsmaßsystem auf. Die Größen der Korrekturmarken 17 und Abstände der Korrekturmarken 17 entsprechen den Größen und Abständen der Positionsmarke 10 des Positionsmaßsystem 2.

Anders als bei den Positionsmarken 10 sind in den Korrekturmarken 17 nicht Absolutpositionswerte kodiert. Vielmehr enthalten die Korrekturmarken 17 Kodierungen in Form von Buchstaben- und/oder Zahlenfolgen, die als Klartexte unterhalb der jeweiligen Korrekturmarken 17 dargestellt sein können. Wesentlich ist, dass sich die Kodierungen der Korrekturmarken 17 eindeutig voneinander unterscheiden.

Das Korrekturband 16 wird auf die defekte Stelle des Positionsmaßsystems 2 aufgeklebt. Dabei kann das Korrekturband 16 in unterschiedlichen Längen zugeschnitten werden. Damit kann das Korrekturband 16 defekte Stellen an beliebigen Stellen des Positionsmaßsystems 2 aufgebracht werden, wobei die Größe der defekten Stelle bedeckt ist.

In einer der Auswerteeinheit 7 des optischen Sensors 1 zugeordneten Speichereinheit ist ein Positionsmaßtabelle des Positionsmaßsystems 2 mit allen Positionswerten der Positionsmarken 10 des Positionsmaßsystems 2 abgespeichert.

Wird, wie in Figur 3 dargestellt, die defekte Stelle des Positionsmaßsystems 2 mit dem Korrekturband 16 überklebt, werden die Korrekturmarken 17 des Korrekturbands 16 vom optischen Sensor 1 erkannt. Der optische Sensor 1 erkennt den Bereich des Korrekturbands 16 und die angrenzenden Positionsmarken 10.

Der optische Sensor 1 übersetzt dann die Kodierungen der Korrekturmarken 17 in eine Korrekturwertfolge, die die Positionswerte der Folge der defekten Positionsmarken 10 ersetzt. Die Korrekturwertfolge bildet dann ausgehend vom Positionswert der letzten fehlerfreien Positionsmarke 10 vor dem Korrekturband 16 bis zum Positionswert der ersten fehlerfreien Positionsmarke 10 nach dem Korrekturband 16 eine Folge, die den Wertebereich der defekten Positionsmarke 10 ersetzt.

Das so reparierte Positionsmaßsystem 2 erlaubt somit über dessen gesamte Länge, insbesondere auch im Bereich des Korrekturbands 16, eine exakte Positionierung des optischen Sensors 1 und damit des Fahrzeugs relativ zum Positionsmaßsystem 2.

Das mit der Korrekturwertfolge korrigierte Positionsmaßsystem 2 wird in der Speichereinheit nicht flüchtig gespeichert und steht somit nach einem Stromausfall sofort zur Positionierung des Fahrzeugs zur Verfügung.

Anstelle der vorgenannten automatischen Korrektur der Positionsmaßtabelle nach Aufkleben des Korrekturbands 16 auf die defekte Stelle des Positionsmaßsystems 2 kann die Korrektur auch durch einen Benutzer erfolgen, der Korrekturwerte für die Positionsmaßtabelle über eine Eingabeeinheit eingibt.

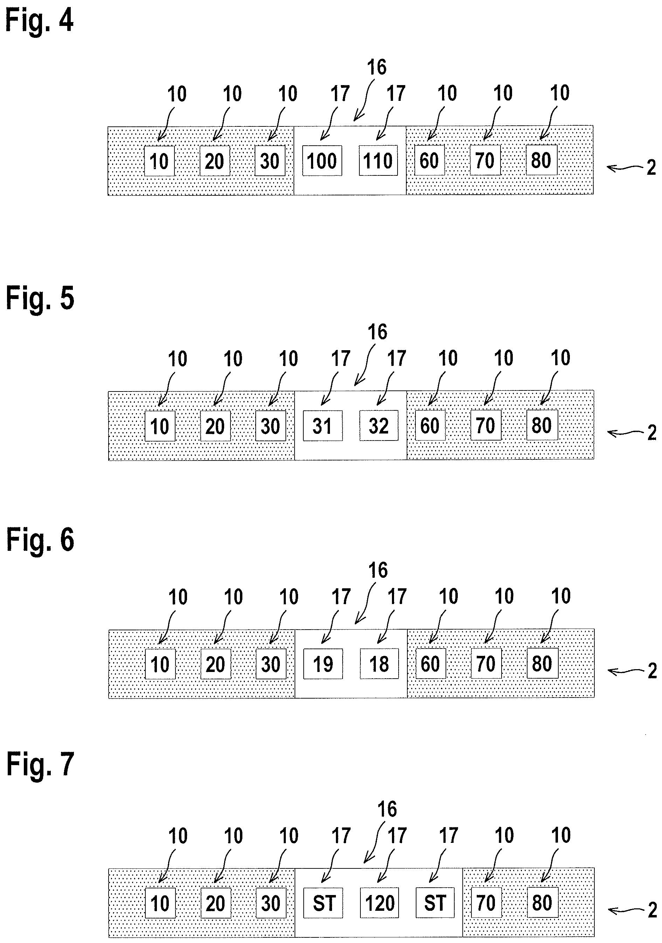

Figur 4 zeigt ein weiteres Ausführungsbeispiel eines Positionsmaßsystems 2 mit einer Folge von Positionsmarken 10 analog zur Ausführungsform gemäß den Figuren 1 und 3.

Auf den Positionsmarken 10 sind in Figur 4 deren Positionswerte 10, 20, ... 80 angegeben, die beispielsweise in cm die Positionen der Positionsmarken 10 innerhalb des Positionsmaßsystems 2 angeben.

Wie Figur 4 zeigt ist das Positionsmaßsystem 2 im Bereich der Positionsmarken 10 mit den Positionswerten 40 und 50 beschädigt, so dass dort ein Korrekturband 16 mit Korrekturmarken 17 aufgebracht ist. Die Korrekturmarken 17 enthalten als Korrekturwerte Positionswerte 100, 110, deren Wertebereich außerhalb des Wertebereichs der Positionswerte der Positionsmarken 10 liegt, so dass mittels des optischen Sensors 1 die Korrekturmarken 17 eindeutig von den Positionsmarken 10 unterschieden werden können.

Vorteilhaft werden die Reparaturstellen im optischen Sensor 1 konfiguriert.

Gemäß einer ersten Ausführungsform wird die Konfiguration mittels einer Ein-/Ausgabeeinheit durchgeführt.

Gemäß einer zweiten Ausführungsform werden an einer Reparaturstelle am Positionsmaßsystem 2 angebrachte Korrekturmarken 17 in einem Einlernvorgang mittels des optischen Sensors 1 ermittelt.

Durch die Konfiguration wird das Positionsmaßsystem 2 mit den Korrekturmarken 17 der Reparaturstelle in der Positionsmaßtabelle hinterlegt.

Erfindungsgemäß werden in der Positionsmaßtabelle die Korrekturwerte der Korrekturmarken 17 durch die Positionswerte der defekten, mit den Korrekturmarken 17 überdeckten Positionsmarken 10 ersetzt, so dass die Positionswerte des ursprünglichen Positionsmaßsystems 2 rekonstruiert werden können.

Dies kann gemäß einer ersten Ausführungsform durch einen Suchalgorithmus bewerkstelligt werden, der die Kontrollmarken in der Positionsmaßtabelle in einer Korrekturtabelle sucht und worauf dann die Kontrollwerte durch die Positionswerte der defekten Positionsmarken 10 ersetzt werden.

Alternativ können auch mit einer Formel aus den Kontrollwerten die Positionswerte berechnet werden. Beispielsweise wird für die Kontrollmarke mit dem Kontrollwert 100 die Formel 100 - 60 = 40 angewendet, wodurch der Positionswert 40 erhalten wird. Für die zweite Kontrollmarke mit dem Kontrollwert 110 wird die Formel 110 - 60 = 50 angewendet, wodurch der Positionswert 50 erhalten wird.

Die Figuren 5 bis 7 zeigen weitere Ausführungsformen des Positionsmaßsystems 2 gemäß Figur 4 mit unterschiedlichen Kontrollmarken zur Ausführung von Reparaturstellen.

Die Figuren 5 und 6 zeigen weitere Ausführungsformen eines Positionsmaßsystems 2 mit einer Reparaturstelle, die jeweils zwei Kontrollmarken umfasst.

Bei den Ausführungsformen der Figuren 5 und 6 bilden die Positionswerte 10, 20, 30 ... 80 der Positionsmarken 10 wieder eine regelmäßige Folge, die in Zehnerschritten von links nach rechts bezogen auf die Geometrie der Figuren 5 und 6 größer werden.

Bei der Ausführungsform gemäß Figur 5 bilden die Kontrollwerte 31, 32 der Kontrollmarken zwar auch eine aufsteigende Sequenz, die jedoch in Einserschritten von links nach rechts größer werden.

Bei der Ausführungsform gemäß Figur 6 sind Kontrollmarken vorgesehen, deren Kontrollwerte 19, 18 eine von links nach rechts abnehmende Folge bilden.

Bei den Ausführungsformen der Figuren 5 und 6 sind somit die Sequenzen der Kontrollwerte von den Sequenzen der Positionswerte unterschiedlich, wodurch die Kontrollmarken von den Positionsmarken 10 unterschieden werden können.

Bei der Ausführungsform gemäß Figur 7 ist eine Reparaturstelle des Positionsmaßsystems 2 mit drei Kontrollmarken vorhanden. Die erste und letzte Kontrollmarke ist eine Steuermarke (gekennzeichnet mit ST). Die mittlere Kontrollmarke enthält als Kontrollwert den Zahlenwert 120.

Anhang der Steuercodes kann mit dem optischen Sensor 1 der Anfang und das Ende der Reparaturstellen erfasst werden.

Die Rekonstruktion des ursprünglichen Positionsmaßsystems 2 durch Ersetzen der Kontrollwerte der Kontrollmarken durch Positionswerte der abgedeckten, defekten Positionsmarken 10 erfolgt analog zur Ausführungsform gemäß Figur 4.

Gemäß einer vorteilhaften Ausführungsform generiert der optische Sensor 1 bei Erfassung von an einer Reparaturstelle angebrachten Korrekturmarken 17 eine Warnmeldung.

Dabei kann die Warnmeldung mit einer voreinstellbaren Verzögerungszeit nach Anbringen der Reparaturstelle generiert werden.

Vorteilhaft enthält die Warnmeldung Positionen der Korrekturmarken 17 am Positionsmaßsystem 2 und/oder den Zeitpunkt des Anbringens der Reparaturstelle.

### Bezugszeichenliste

- (1): Optischer Sensor
- (2): Positionsmaßsystem
- (3): Regallager
- (4): Gehäuse
- (5): Beleuchtungseinheit
- (6): Empfänger
- (7): Auswerteeinheit
- (8): Sichtfeld
- (9): Lichtstrahlen
- (10): Positionsmarke
- (11): Sender
- (12): Sendelichtstrahlen
- (13): Ablenkeinheit
- (14): Strahlteiler
- (15): Empfangslichtstrahlen
- (16): Korrekturband
- (17): Korrekturmarke

- (100): Sensoranordnung

## Patentansprüche

1. Sensoranordnung (100) mit einem bandförmigen Positionsmaßsystem (2), welches eine Anordnung von Positionsmarken (10) aufweist, in welchen jeweils als Positionswerte die Positionen der Positionsmarken (10) innerhalb des Positionsmaßsystems (2) kodiert sind, und mit einem relativ zum Positionsmaßsystem (2) beweglichen optischen Sensor (1), wodurch durch Lesen von Positionsmarken (10) mittels des optischen Sensors (1) dessen Position relativ zum Positionsmaßsystem (2) bestimmbar ist, **dadurch gekennzeichnet, dass** die Sensoranordnung (100) ein Korrekturband (16) aufweist, dass eine defekte Folge von Positionsmarken (10) des Positionsmaßsystems (2) mit dem Korrekturband (16) abgedeckt wird, wobei das Korrekturband (16) eine Folge von Korrekturmarken (17) aufweist, wobei sich die Korrekturmarken (17) von den Positionsmarken (10) unterscheiden, dass die in den Positionsmarken (10) enthaltenen Positionswerte in einer Positionsmaßtabelle im optischen Sensor (1) abgespeichert sind, und dass bei einem defekte Positionsmarken (10) abdeckenden Korrekturband (16) die Kodierungen der Korrekturmarken (17) des Korrekturbands (16) den Wertebereich der Positionswerte der defekten Positionsmarke (10) in der Positionsmaßtabelle ersetzen, oder dass die Korrekturmarken (17) einen Wertebereich bilden, aus welchem im optischen Sensor (1) die Positionswerte der defekten Positionsmarken (10) ermittelt werden.

2. Sensoranordnung (100) nach Anspruch 1, **dadurch gekennzeichnet, dass** die Kodierungen der Korrekturmarken (17) des Korrekturbands (16) eine Zahlen- und/oder Buchstabenfolge bilden.

3. Sensoranordnung (100) nach einem der Ansprüche 1 oder 2, **dadurch gekennzeichnet, dass** der optische Sensor (1) eine Speichereinheit aufweist, in welcher die Positionsmaßtabelle und die Kodierungen der Korrekturmarken (17) nicht flüchtig abgespeichert sind.

4. Sensoranordnung (100) nach Anspruch 3, **dadurch gekennzeichnet, dass** die Speichereinheit einer Auswerteeinheit (7) des optischen Sensors (1) zugeordnet ist.

5. Sensoranordnung (100) nach einem der Ansprüche 1 bis 4, **dadurch gekennzeichnet, dass** in wenigstens einer Korrekturmarke (17) des Korrekturbands (16) eine Bereichskennung kodiert ist.

6. Sensoranordnung (100) nach einem der Ansprüche 1 bis 5, **dadurch gekennzeichnet, dass** mittels des optischen Sensors (1) die Korrekturmarken (17) erkannt werden und die Kodierungen der Korrekturmarken (17) in die Positionsmaßtabelle eingetragen werden.

7. Sensoranordnung (100) nach einem der Ansprüche 1 bis 5, **dadurch gekennzeichnet, dass** der optische Sensor (1) eine Eingabeeinheit aufweist, über welche die Kodierungen der Korrekturmarke (17) des Korrekturbands (16) einsetzbar sind.

8. Sensoranordnung (100) nach einem der Ansprüche 1 bis 7, **dadurch gekennzeichnet, dass** im optischen Sensor (1) die Kodierungen der Korrekturmarke (17) in eine Korrekturwertfolge übersetzt werden, welche den Wertebereich der abgedeckten Positionsmarke (10) ersetzt.

9. Sensoranordnung (100) nach einem der Ansprüche 1 bis 4, **dadurch gekennzeichnet, dass** der Wertebereich der Korrekturmarken (17) im Wertebereich der Positionsmarken (10) nicht enthalten ist, und/oder dass sich die Korrekturmarken (17) von den Positionsmarken (10) hinsichtlich eines Zusatzmerkmals unterscheiden, welches mit dem optischen Sensor (1) erfassbar ist.

10. Sensoranordnung (100) nach Anspruch 9, **dadurch gekennzeichnet, dass** die Korrekturmarken (17) eine Sequenz von Werten bilden, die von der Sequenz der in den Positionsmarken (10) enthaltenen Positionen verschieden ist, wobei die Sequenzen der Korrekturmarken (17) und der Positionsmarken (10) mittels des optischen Sensors (1) unterscheidbar sind.

11. Sensoranordnung (100) nach einem der Ansprüche 9 oder 10, **dadurch gekennzeichnet, dass** wenigstens eine Korrekturmarke (17) einen Steuercode enthält.

12. Sensoranordnung (100) nach einem der Ansprüche 1 bis 4, **dadurch gekennzeichnet, dass** die Ermittlung von Positionswerten defekter, mit Korrekturmarken (17) abgedeckter Positionsmarken (10) mittels Formeln erfolgt.

13. Sensoranordnung (100) nach einem der Ansprüche 1 bis 5, **dadurch gekennzeichnet, dass** die Ermittlung von Positionswerten defekter, mit Korrekturmarken (17) abgedeckter Positionsmarken (10) durch Suchen von Kodierungen der Korrekturmarken (17) in einer Korrekturtabelle erfolgt.

14. Sensoranordnung (100) nach einem der Ansprüche 1 bis 13, **dadurch gekennzeichnet, dass** an einer Reparaturstelle am Positionsmaßsystem (2) angebrachte Korrekturmarken (17) im optischen Sensor (1) konfigurierbar sind.

15. Sensoranordnung (100) nach Anspruch 14, **dadurch gekennzeichnet, dass** die Konfiguration mittels einer Ein-/Ausgabeeinheit durchgeführt wird.

16. Sensoranordnung (100) nach Anspruch 14, **dadurch gekennzeichnet, dass** an einer Reparaturstelle am Positionsmaßsystem (2) angebrachte Korrekturmarken (17) in einem Einlernvorgang mittels des optischen Sensors (1) ermittelt werden.

17. Sensoranordnung (100) nach Anspruch 15, **dadurch gekennzeichnet, dass** der Einlernvorgang während eines Arbeitsbetriebs des optischen Sensors (1) durchführbar ist.

18. Sensoranordnung (100) nach einem der Ansprüche 1 bis 14, **dadurch gekennzeichnet, dass** der optische Sensor (1) bei Erfassung von an einer Reparaturstelle angebrachten Korrekturmarken (17) eine Warnmeldung generiert.

19. Sensoranordnung (100) nach Anspruch 18, **dadurch gekennzeichnet, dass** die Warnmeldung mit einer voreinstellbaren Verzögerungszeit nach Anbringen der Reparaturstelle generiert wird.

20. Sensoranordnung (100) nach einem der Ansprüche 18 oder 19, **dadurch gekennzeichnet, dass** die Warnmeldung Positionen der Korrekturmarken (17) am Positionsmaßsystem (2) und/oder den Zeitpunkt des Anbringens der Reparaturstelle enthält.

21. Sensoranordnung (100) nach einem der Ansprüche 1 bis 20, **dadurch gekennzeichnet, dass** die Positionsmarken (10) und/oder Korrekturmarken (17) optische Codes in Form von Barcodes, 2 D-Codes oder 3 D-Codes sind.

22. Sensoranordnung (100) nach einem der Ansprüche 1 bis 21, **dadurch gekennzeichnet, dass** die Positionsmarken (10) und/oder Korrekturmarken (17) in Form von geprägten oder verschiedenfarbigen Codes ausgebildet sind.

23. Sensoranordnung (100) nach einem der Ansprüche 1 bis 21, **dadurch gekennzeichnet, dass** die Positionsmarken (10) und/oder Korrekturmarken (17) nicht sichtbare Codestrukturen aufweisen.

24. Sensoranordnung (100) nach einem der Ansprüche 1 bis 23, **dadurch gekennzeichnet, dass** die Positionsmarken (10) und/oder Korrekturmarken (17) jeweils aus wenigstens zwei Codes bestehen, die mittels eines mehrkanaligen Abtastsystems abgetastet werden.

25. Sensoranordnung (100) nach einem der Ansprüche 1 bis 24, **dadurch gekennzeichnet, dass** der optische Sensor (1) ein scannender Sensor ist.

26. Sensoranordnung (100) nach einem der Ansprüche 1 bis 24, **dadurch gekennzeichnet, dass** der optische Sensor (1) ein Kamerasensor ist.

27. Sensoranordnung (100) nach einem der Ansprüche 1 bis 26, **dadurch gekennzeichnet, dass** der optische Sensor (1) an einem Fahrzeug angeordnet ist.

28. Sensoranordnung (100) nach einem der Ansprüche 1 bis 27, **dadurch gekennzeichnet, dass** das Positionsmaßsystem (2) an einer Fahrbahnbegrenzung angebracht ist.

29. Verfahren zum Betrieb einer Sensoranordnung (100) mit einem bandförmigen Positionsmaßsystem (2), welches eine Anordnung von Positionsmarken (10) aufweist, in welchen jeweils als Positionswerte die Positionen der Positionsmarken (10) innerhalb des Positionsmaßsystems (2) kodiert sind, und mit einem relativ zum Positionsmaßsystem (2) beweglichen optischen Sensor (1), wodurch durch Lesen von Positionsmarken (10) mittels des optischen Sensors (1) dessen Position relativ zum Positionsmaßsystem (2) bestimmbar ist, **dadurch gekennzeichnet, dass** die Sensoranordnung (100) ein Korrekturband (16) aufweist, dass eine defekte Folge von Positionsmarken (10) des Positionsmaßsystems (2) mit dem Korrekturband (16) abgedeckt wird, wobei das Korrekturband (16) eine Folge von Korrekturmarken (17) aufweist, wobei sich die Korrekturmarken (17) von den Positionsmarken (10) unterscheiden, dass die in den Positionsmarken (10) enthaltenen Positionswerte in einer Positionsmaßtabelle im optischen Sensor (1) abgespeichert sind, und dass bei einem defekte Positionsmarken (10) abdeckenden Korrekturband (16) die Kodierungen der Korrekturmarken (17) des Korrekturbands (16) den Wertebereich der Positionswerte der defekten Positionsmarke (10) in der Positionsmaßtabelle ersetzen, oder dass die Korrekturmarken (17) einen Wertebereich bilden, aus welchem im optischen Sensor (1) die Positionswerte der defekten Positionsmarken (10) ermittelt werden.

## Claims

1. Sensor arrangement (100) with a tape-shaped position measuring system (2) which has an arrangement of position marks (10), in which the positions of the position marks (10) within the position measuring system (2) are encoded as position values, and with an optical sensor (1) that is movable relative to the position measuring system (2), whereby the position of the optical sensor (1) relative to the position measuring system (2) can be determined by reading position marks (10) using the optical sensor (1), **characterised in that** the sensor arrangement (100) has a correction tape (16) which covers a defective sequence of position marks (10) of the position measuring system (2) is covered by the correction tape (16), wherein the correction tape (16) has a sequence of correction marks (17), wherein the correction marks (17) differ from the position marks (10), that the position values contained in the position marks (10) are stored in a position measurement table in the optical sensor (1), and that, in the case of a correction tape (16) covering defective position marks (10), the codes of the correction marks (17) of the correction tape (16) replace the value range of the position values of the defective position mark (10) in the position measurement table, or that the correction marks (17) form a value range from which the position values of the defective position marks (10) are determined in the optical sensor (1).

2. Sensor arrangement (100) according to claim 1, **characterised in that** the codes of the correction marks (17) of the correction tape (16) form a sequence of numbers and/or letters.

3. Sensor arrangement (100) according to one of claims 1 or 2, **characterised in that** the optical sensor (1) has a memory unit in which the position scale table and the codes of the correction marks (17) are stored non-volatily.

4. Sensor arrangement (100) according to claim 3, **characterised in that** the memory unit is assigned to an evaluation unit (7) of the optical sensor (1).

5. Sensor arrangement (100) according to one of claims 1 to 4, **characterised in that** a range identifier is encoded in at least one correction mark (17) of the correction band (16).

6. Sensor arrangement (100) according to one of claims 1 to 5, **characterised in that** the correction marks (17) are detected by means of the optical sensor (1) and the codes of the correction marks (17) are entered into the position measurement table.

7. Sensor arrangement (100) according to one of claims 1 to 5, **characterised in that** the optical sensor (1) has an input unit via which the codes of the correction mark (17) of the correction tape (16) can be entered.

8. Sensor arrangement (100) according to one of claims 1 to 7, **characterised in that** in the optical sensor (1) the codes of the correction mark (17) are translated into a correction value sequence which replaces the value range of the covered position mark (10).

9. Sensor arrangement (100) according to one of claims 1 to 4, **characterised in that** the value range of the correction marks (17) is not contained in the value range of the position marks (10), and/or **in that** the correction marks (17) differ from the position marks (10) with regard to an additional feature which can be detected by the optical sensor (1).

10. Sensor arrangement (100) according to claim 9, **characterised in that** the correction marks (17) form a sequence of values that differs from the sequence of positions contained in the position marks (10), wherein the sequences of the correction marks (17) and the position marks (10) can be distinguished by means of the optical sensor (1).

11. Sensor arrangement (100) according to one of claims 9 or 10, **characterised in that** at least one correction mark (17) contains a control code.

12. Sensor arrangement (100) according to one of claims 1 to 4, **characterised in that** the determination of position values of defective position marks (10) covered by correction marks (17) is carried out by means of formulas.

13. Sensor arrangement (100) according to one of claims 1 to 5, **characterised in that** the determination of position values of defective position marks (10) covered by correction marks (17) is carried out by searching for codes of the correction marks (17) in a correction table.

14. Sensor arrangement (100) according to one of claims 1 to 13, **characterised in that** correction marks (17) attached to a repair point on the position measuring system (2) can be configured in the optical sensor (1).

15. Sensor arrangement (100) according to claim 14, **characterised in that** the configuration is carried out by means of an input/output unit.

16. Sensor arrangement (100) according to claim 14, **characterised in that** correction marks (17) attached to a repair site on the position measuring system (2) are determined in a teach-in process by means of the optical sensor (1).

17. Sensor arrangement (100) according to claim 15, **characterised in that** the teach-in process can be carried out during operation of the optical sensor (1).

18. Sensor arrangement (100) according to one of claims 1 to 14, **characterised in that** the optical sensor (1) generates a warning message when correction marks (17) attached to a repair site are detected.

19. Sensor arrangement (100) according to claim 18, **characterised in that** the warning message is generated with a presettable delay time after the repair site has been applied.

20. Sensor arrangement (100) according to one of claims 18 or 19, **characterised in that** the warning message contains positions of the correction marks (17) on the position measuring system (2) and/or the time at which the repair site was applied.

21. Sensor arrangement (100) according to one of claims 1 to 20, **characterised in that** the position marks (10) and/or correction marks (17) are optical codes in the form of barcodes, 2D codes or 3D codes.

22. Sensor arrangement (100) according to one of claims 1 to 21, **characterised in that** the position marks (10) and/or correction marks (17) are formed in the form of embossed or different-coloured codes.

23. Sensor arrangement (100) according to one of claims 1 to 21, **characterised in that** the position marks (10) and/or correction marks (17) have invisible code structures.

24. Sensor arrangement (100) according to one of claims 1 to 23, **characterised in that** the position marks (10) and/or correction marks (17) each consist of at least two codes which are scanned by means of a multi-channel scanning system.

25. Sensor arrangement (100) according to one of claims 1 to 24, **characterised in that** the optical sensor (1) is a scanning sensor.

26. Sensor arrangement (100) according to one of claims 1 to 24, **characterised in that** the optical sensor (1) is a camera sensor.

27. Sensor arrangement (100) according to one of claims 1 to 26, **characterised in that** the optical sensor (1) is arranged on a vehicle.

28. Sensor arrangement (100) according to one of claims 1 to 27, **characterised in that** the position measuring system (2) is attached to a road boundary.

29. Method for operating a sensor arrangement (100) with a tape-shaped position measuring system (2), which has an arrangement of position marks (10), in which the positions of the position marks (10) within the position measuring system (2) are encoded as position values, and with an optical sensor (1) that is movable relative to the position measuring system (2), whereby the position of the optical sensor (1) relative to the position measuring system (2) can be determined by reading position marks (10) using the optical sensor (1), **characterised in that** the sensor arrangement (100) has a correction tape (16) which covers a defective sequence of position marks (10) of the position measuring system (2) is covered by the correction tape (16), wherein the correction tape (16) has a sequence of correction marks (17), wherein the correction marks (17) differ from the position marks (10), that the position values contained in the position marks (10) are stored in a position measurement table in the optical sensor (1), and that, in the case of a correction tape (16) covering defective position marks (10), the codes of the correction marks (17) of the correction tape (16) replace the value range of the position values of the defective position mark (10) in the position measurement table, or that the correction marks (17) form a value range from which the position values of the defective position marks (10) are determined in the optical sensor (1).

## Revendications

1. Agencement de capteur (100) comprenant un système de mesure de position (2) en forme de bande qui comporte un agencement de marqueurs de position (10), dans lequel les positions des marqueurs de position (10) à l'intérieur du système de mesure de position (2) sont codées sous forme de valeurs de position, et comprenant un capteur optique (1) qui est mobile par rapport au système de mesure de position (2), la position du capteur optique (1) par rapport au système de mesure de position (2) pouvant être déterminée par la lecture de marqueurs de position (10) à l'aide du capteur optique (1), **caractérisé en ce que** le agencement de capteur (100) comporte une bande de correction (16) qui recouvre une séquence défectueuse de marqueurs de position (10) du système de mesure de position (2), la bande de correction (16), la bande de correction (16) comportant une séquence de marqueurs de correction (17), les marqueurs de correction (17) différant des marqueurs de position (10), les valeurs de position contenues dans les marqueurs de position (10) étant enregistrées dans un tableau de mesure de position dans le capteur optique (1), et, dans le cas d'une bande de correction (16) recouvrant des marqueurs de position défectueuses (10), les codes des marqueurs de correction (17) de la bande de correction (16) remplacent la plage de valeurs des valeurs de position du marqueur de position défectueuse (10) dans le tableau de mesure de position, ou que les marqueurs de correction (17) forment une plage de valeurs à partir de laquelle les valeurs de position des marqueurs de position défectueuses (10) sont déterminées dans le capteur optique (1).

2. Agencement de capteur (100) selon la revendication 1, **caractérisé en ce que** les codes des marqueurs de correction (17) de la bande de correction (16) forment une séquence de chiffres et/ou de lettres.

3. Agencement de capteur (100) selon l'une des revendications 1 ou 2, **caractérisé en ce que** le capteur optique (1) comporte une unité de mémoire dans laquelle le tableau d'échelle de position et les codes des marqueurs de correction (17) sont enregistrés de manière non volatile.

4. Agencement de capteur (100) selon la revendication 3, **caractérisé en ce que** l'unité de mémoire est associée à une unité d'évaluation (7) du capteur optique (1).

5. Agencement de capteur (100) selon l'une des revendications 1 à 4, **caractérisé en ce qu'**un identifiant de plage est codé dans au moins un marqueur de correction (17) de la bande de correction (16).

6. Agencement de capteur (100) selon l'une des revendications 1 à 5, **caractérisé en ce que** les marqueurs de correction (17) sont détectées au moyen du capteur optique (1) et les codes des marqueurs de correction (17) sont entrés dans le tableau de mesure de position.

7. Agencement de capteur (100) selon l'une des revendications 1 à 5, **caractérisé en ce que** le capteur optique (1) comporte une unité d'entrée par laquelle les codes du marqueur de correction (17) de la bande de correction (16) peuvent être entrés.

8. Agencement de capteur (100) selon l'une des revendications 1 à 7, **caractérisé en ce que**, dans le capteur optique (1), les codes du marqueur de correction (17) sont convertis en une séquence de valeurs de correction qui remplace la plage de valeurs du marqueur de position recouverte (10).

9. Agencement de capteur (100) selon l'une des revendications 1 à 4, **caractérisé en ce que** la plage de valeurs des marqueurs de correction (17) n'est pas contenue dans la plage de valeurs des marqueurs de position (10) et/ou **en ce que** les marqueurs de correction (17) se distinguent des marqueurs de position (10) par une caractéristique supplémentaire pouvant être détectée par le capteur optique (1).

10. Agencement de capteur (100) selon la revendication 9, **caractérisé en ce que** les marqueurs de correction (17) forment une séquence de valeurs qui diffère de la séquence de positions contenue dans les marqueurs de position (10), les séquences des marqueurs de correction (17) et des marqueurs de position (10) pouvant être distinguées au moyen du capteur optique (1).

11. Agencement de capteur (100) selon l'une des revendications 9 ou 10, **caractérisé en ce qu'**au moins un repère de correction (17) contient un code de contrôle.

12. Agencement de capteur (100) selon l'une des revendications 1 à 4, **caractérisé en ce que** la détermination des valeurs de position des marqueurs de position défectueuse (10) recouvertes par des marqueurs de correction (17) est effectuée à l'aide de formules.

13. Agencement de capteur (100) selon l'une des revendications 1 à 5, **caractérisé en ce que** la détermination des valeurs de position des marqueurs de position défectueuse (10) recouvertes par des marqueurs de correction (17) ( ) est effectuée en recherchant les codes des marqueurs de correction (17) dans un tableau de correction.

14. Agencement de capteur (100) selon l'une des revendications 1 à 13, **caractérisé en ce que** des marqueurs de correction (17) fixées à un point de réparation sur le système de mesure de position (2) peuvent être configurées dans le capteur optique (1).

15. Agencement de capteur (100) selon la revendication 14, **caractérisé en ce que** la configuration est réalisée au moyen d'une unité d'entrée/sortie.

16. Agencement de capteur (100) selon la revendication 14, **caractérisé en ce que** les marqueurs de correction (17) fixés à un emplacement de réparation sur le système de mesure de position (2) sont déterminés dans un processus d'apprentissage au moyen du capteur optique (1).

17. Agencement de capteur (100) selon la revendication 15, **caractérisé en ce que** le processus d'apprentissage peut être effectué pendant le fonctionnement du capteur optique (1).

18. Agencement de capteur (100) selon l'une des revendications 1 à 14, **caractérisé en ce que** le capteur optique (1) génère un message d'avertissement lorsque des marqueurs de correction (17) apposés sur un site de réparation sont détectées.

19. Agencement de capteur (100) selon la revendication 18, **caractérisé en ce que** le message d'avertissement est généré avec un délai prédéfini après l'application du site de réparation.

20. Agencement de capteur (100) selon l'une des revendications 18 ou 19, **caractérisé en ce que** le message d'avertissement contient les positions des marqueurs de correction (17) sur le système de mesure de position (2) et/ou l'heure à laquelle le site de réparation a été appliqué.

21. Agencement de capteur (100) selon l'une des revendications 1 à 20, **caractérisé en ce que** les marqueurs de position (10) et/ou les marqueurs de correction (17) sont des codes optiques sous forme de codes-barres, de codes 2D ou de codes 3D.

22. Agencement de capteur (100) selon l'une des revendications 1 à 21, **caractérisé en ce que** les marqueurs de position (10) et/ou les marqueurs de correction (17) sont sous forme de codes en relief ou de couleurs différentes.

23. Agencement de capteur (100) selon l'une des revendications 1 à 21, **caractérisé en ce que** les marqueurs de position (10) et/ou les repères de correction (17) ont des structures de code invisibles.

24. Agencement de capteur (100) selon l'une des revendications 1 à 23, **caractérisé en ce que** les marqueurs de position (10) et/ou les repères de correction (17) sont constitués chacun d'au moins deux codes qui sont balayés au moyen d'un système de balayage multicanaux.

25. Agencement de capteur (100) selon l'une des revendications 1 à 24, **caractérisé en ce que** le capteur optique (1) est un capteur à balayage.

26. Agencement de capteur (100) selon l'une des revendications 1 à 24, **caractérisé en ce que** le capteur optique (1) est un capteur à caméra.

27. Agencement de capteur (100) selon l'une des revendications 1 à 26, **caractérisé en ce que** le capteur optique (1) est disposé sur un véhicule.

28. Agencement de capteur (100) selon l'une des revendications 1 à 27, **caractérisé en ce que** le système de mesure de position (2) est fixé à une bordure de route.

29. Procédé pour faire fonctionner un agencement de capteurs (100) avec un système de mesure de position (2) en forme de bande, qui comporte un agencement de marqueurs de position (10), dans lequel les positions des marqueurs de position (10) à l'intérieur du système de mesure de position (2) sont codés sous forme de valeurs de position, et avec un capteur optique (1) qui est mobile par rapport au système de mesure de position (2), la position du capteur optique (1) par rapport au système de mesure de position (2) pouvant être déterminée par la lecture de marqueurs de position (10) à l'aide du capteur optique (1), **caractérisé en ce que** le dispositif de capteurs (100) comporte une bande de correction (16) qui recouvre une séquence défectueuse de marqueurs de position (10) du système de mesure de position (2), la bande de correction (16), la bande de correction (16) comportant une séquence de marqueurs de correction (17), les marqueurs de correction (17) différant des marqueurs de position (10), les valeurs de position contenues dans les marqueurs de position (10) étant enregistrées dans un tableau de mesure de position dans le capteur optique (1), et, dans le cas d'une bande de correction (16) recouvrant des marqueurs de position défectueuse (10), les codes des marqueurs de correction (17) de la bande de correction (16) remplacent la plage de valeurs des valeurs de position du marqueur de position défectueuse (10) dans le tableau de mesure de position, ou que les marqueurs de correction (17) forment une plage de valeurs à partir de laquelle les valeurs de position des marqueurs de position défectueuse (10) sont déterminées dans le capteur optique (1).
